Europäisches Patentamt
European Patent Office
Office européen des brevets

(19)

(11) Publication number: 0 294 193 A2

(12) # EUROPEAN PATENT APPLICATION

(21) Application number: **88305030.4**

(22) Date of filing: **02.06.88**

(51) Int. Cl.⁴: **H 04 N 1/46**
G 03 C 7/26

(30) Priority: **05.06.87 JP 142071/87**
**05.06.87 JP 142072/87**

(43) Date of publication of application:
**07.12.88 Bulletin 88/49**

(84) Designated Contracting States: **DE FR GB IT NL**

(71) Applicant: **KONICA CORPORATION**
**No. 26-2, Nishi-Shinjuku 1-chome Shinjuku-ku**
**Tokyo 106 (JP)**

(72) Inventor: **Hattori, Tuyosi**
**c/o Konica Corporation Sakuramachi**
**Hino-shi Tokyo (JP)**

**Ohya, Yukio**
**c/o Konica Corporation Sakuramachi**
**Hino-shi Tokyo (JP)**

**Ohtani, Hirofumi**
**c/o Konica Corporation Sakuramachi**
**Hino-shi Tokyo (JP)**

**Tanaka, Masanao**
**c/o Konica Corporation Sakuramachi**
**Hino-shi Tokyo (JP)**

**Matsuzaka, Syoji**
**c/o Konica Corporation Sakuramachi**
**Hino-shi Tokyo (JP)**

(74) Representative: **Harrison, Michael Robert et al**
**Urquhart-Dykes & Lord 91 Wimpole Street**
**London W1M 8AH (GB)**

(54) **Apparatus for forming color image, and light-sensitive silver halide color photographic material suited for optical scanning exposure.**

(57) Disclosed is an apparatus for forming a color image, comprising a scanning exposure unit, wherein the maximum intensity wavelength (λmax) of spectral distribution of the light intensity of at least one light source of the scanning exposure unit is 560 nm ≦ λmax ≦ 620 nm, and the half width (W) of the spectral distribution is W ≦ 20 nm.

Disclosed is also a light-sensitive silver halide color photographic material comprising a support and having thereon at least three light-sensitive layers containing a non-diffusible coupler and a silver halide emulsion, wherein at least one of the light-sensitive layers has been subjected to spectral sensitization so that the maximum sensitivity wavelength (λY) of spectral sensitivity distribution may be 560 nm ≦ λY ≦ 620 nm, and the light-sensitive silver halide color photographic material is use for the the above apparatus.

FIG. 1

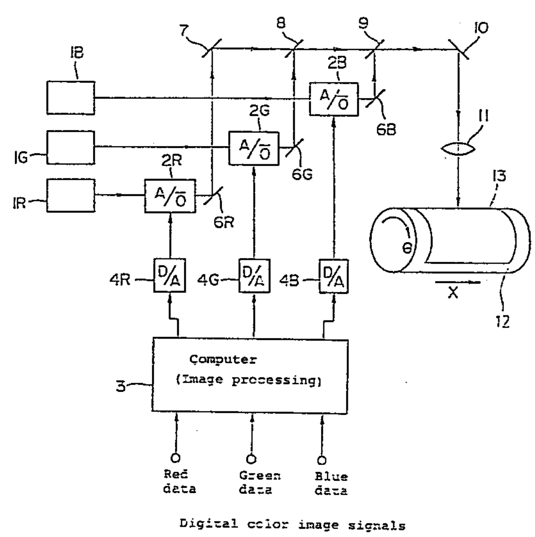


EP 0 294 193 A2

**Description**

**Apparatus for forming color image, and light-sensitive silver halide color photographic material suited for optical scanning exposure**

## BACKGROUND OF THE INVENTION

This invention relates to an apparatus for forming a color image, and more particularly to an apparatus for forming a color image, comprising a scanning exposure unit for obtaining a color image by scanning a beam of light on a light-sensitive material. This invention further relates to a light-sensitive silver halide color photographic material, and more particularly to a light-sensitive silver halide color photographic material suited for optical scanning exposure.

Known as one of methods for the exposure of lightsensitive silver halide color photographic materials is the so-called optical scanning exposure method, in which a beam of light is modulated and then scanned on a light-sensitive material to obtain an image. The light-sensitive silver halide color photographic materials to be used are constituted of a blue-sensitive layer, green-sensitive layer and red-sensitive layer, which have been spectrally sensitized so as to correspond to blue, green and red (hereinafter often referred to as B, G and R), respectively. For this reason, used as light sources of the above optical scanning exposure unit are light of blue, green and red.

A principle of obtaining a color image by means of the optical scanning exposure unit will be described below.

Color image data separated into the three colors B, G and R are converted to light intensities of correspondingly different wavelength bands, and scanning is made on a light-sensitive color photographic material by use of the light of these. The scanning herein mentioned, which may be made by moving the light or by moving the light-sensitive material, means the relative movement of light to the light-sensitive material. Used as the light-sensitive material are those having spectral sensitivity distribution corresponding to the intensity distribution of the three kinds of light to be used. The light-sensitive material receives the light signals having been modulated into intensities with the three kinds of spectral sensitivities on the basis of the color image data of the respectively corresponding B, G and R, and is color-formed in a suitable manner depending on the light signals, whereupon a color image can be obtained.

Known as three kinds of light sources are those using the three colors B, G and R. Known as the light sources are combination of white light sources such as glow lamps, xenon lamps, mercury lamps and tungsten lamps with filters; light-emitting diodes, gas lasers, solid lasers, semiconductor lasers and so forth. In general, coherent lasers are often used as the light sources in view of the high luminance, focusing performance, monochromatic sensitivity, etc. Specifically, the blue light source includes a He-Cd gas laser (441.6 nm) and an $Ar^+$ gas laser (488.0 nm); the green light source, an $Ar^+$ gas laser (514.5 nm), a He-Ne gas laser (543.5 nm); and the red light source, a He-Ne gas laser (632.8 nm).

Of the above, very superior light sources are He-Ne gas lasers as being inexpensive and stable, having a long life of the laser, and being composed in a compact unit. However, since none of the above He-Ne gas lasers can emit blue light, the present state of thing is such that light sources that are unstable, expensive, short in life and large in scale of the unit are used as the blue light sources.

Thus, questioned as an important subject is no availability for any good blue light source in constituting the scanning exposure unit. Also sought after is the advent of a light-sensitive silver halide photographic material feasible for optical scanning exposure by using light sources that are inexpensive and excellent in the stability, life and compactness.

## SUMMARY OF THE INVENTION

A first object of this invention is to provide an apparatus for forming a color image, having a scanning exposure unit that employs inexpensive, stable, compact and long-life light sources, and capable of obtaining a color image of high image quality.

A second object of this invention is to provide a light-sensitive silver halide color photographic material that can obtain a color image according to an optical scanning exposure method using light sources that are inexpensive and excellent in the stability, life and compactness.

The above first object of this invention can be achieved by the following means. Namely, it can be achieved by an apparatus for forming a color image, comprising a scanning exposure unit, wherein the maximum sensitivity wavelength ($\lambda$ max) of spectral distribution of the light intensity of at least one light source of said scanning exposure unit is 560 nm $\leqq \lambda$ max $\leqq$ 620 nm, and the half width (W) of the spectral distribution is W $\leqq$ 20 nm.

Although no good light source is available as the blue light source as mentioned above, a good light source is available as a yellow light source which is 560 nm $\leqq \lambda$ max $\leqq$ 620 nm and W $\leqq$ 20 nm. For example, it includes He-Ne gas lasers (594.1 nm, 611.9 nm). These are inexpensive, stable, compact and of long life. A

color image can be obtained by using a light-sensitive material having the spectral sensitivity corresponding to the spectral distribution of light intensity of these yellow light sources, and thus the first object of this invention can be achieved.

The above second object of this invention can be achieved by a light-sensitive silver halide color photographic material comprising a support and having thereon at least three light-sensitive layers containing a non-diffusible coupler and a silver halide emulsion, wherein at least one of said light-sensitive layers has been subjected to spectral sensitization so that the maximum sensitivity wavelength ($\lambda Y$) of spectral sensitivity distribution may be 560 nm $\leqq \lambda Y \leqq$ 620 nm.

## BRIEF DESCRIPTION OF THE DRAWINGS

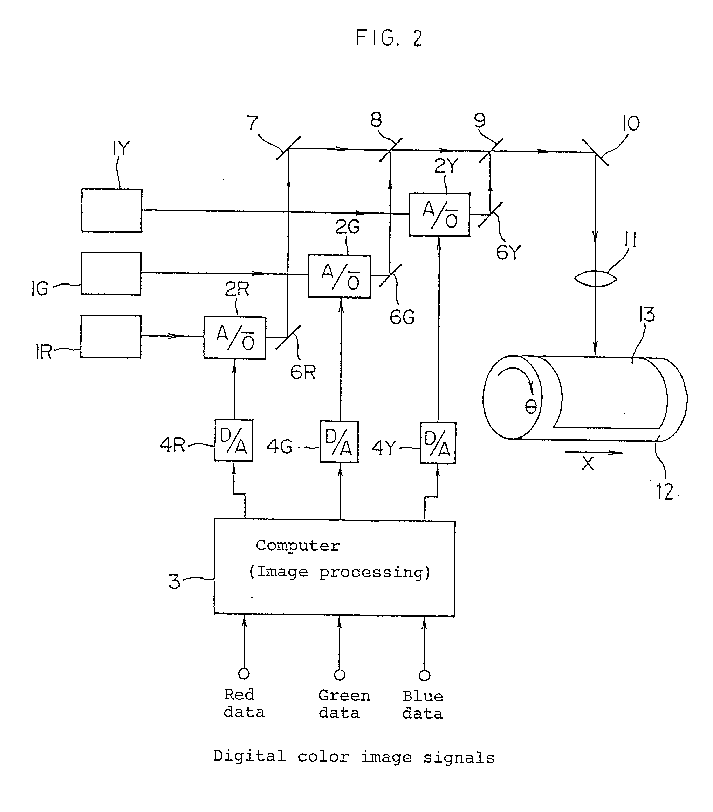

Fig. 1 is a block diagram of this invention, and Fig. 2 is a block diagram of the apparatus illustrating an example of this invention.

## DESCRIPTION OF THE PREFERRED EMBODIMENTS

The constitution of the apparatus for forming a color image of this invention will be described below in detail with reference to Fig. 1

Fig. 1 is a block diagram of this invention.

Light sources lB, lG and lR are for use in the writing of blue data, green data and red data, respectively, for the images to be outputted.

The beams of light emitted from the light sources 1B, 1G and 1R are respectively subjected to beam strength modulation in optical modulators 2B, 2G and 2R according to the digital color image signals separated into three colors, i.e., blue data, green data and red data.

The above blue data, green data and red data are respectively D/A-converted in D/A convertors 4B, 4G and 4R and forwarded to the optical modulators 2B, 2G and 2R.

The light beams of the respective colors, modulated by the optical modulators 2B, 2G and 2R are made change in optical axes by the reflection by mirrors 6B, 6G and 6R, where the light beam reflected by the mirror 6R is adjusted in its optical axis to the side of a dichromic mirror 8 and synthesized with the reflected beam from the mirror 6G by means of a dichromic mirror 9. The light beam having synthesized by these mirrors is adjusted in its optical axis by a mirror 10, further focused through a lens 11 and irradiated on a light-sensitive color photographic material 13 rolled around a drum 12. The drum 12 is rotated in a constant speed in the direction of arrow $\theta$(primary scanning) and concurrently moved to the direction of arrow X (secondary scanning), whereby image printing is effected on the light-sensitive color photographic material 13.

In this invention, at least one light source may comprise a yellow light source whose maximum intensity wavelength ($\lambda max$) of spectral distribution is 560 nm $\leqq \lambda$ max $\leqq$ 620 and the half width (W) of the spectral distribution is W $\leqq$ 20 nm, and the light sources 1B, 1G, and 1R may be any of;

(1) the combination of three colors of green light, yellow light and red light;
(2) the combination of three colors of green light, yellow light and infrared light;
(3) the combination of three colors of yellow light, red light and infrared light; and
(4) the combination of three colors of yellow light and two kinds of infrared light having different wavelength, and any of the three colors may constitute 1B, 1G and 1R.

In view of the operation for the matching of optical axis, preferred is combination 1) comprising visible three colors.

Preferred as the yellow light source used in this invention are light sources whose maximum intensity wavelength ($\lambda max$) of spectral distribution of light intensity is 560 nm $\leqq \lambda max \leqq$ 620 nm and the half width of the spectral distribution (W) is W $\leqq$ 20 nm, specifically including gas lasers, solid lasers, semiconductor lasers or the like capable of emitting a laser beam of narrow output light intensity distribution. Particularly preferred are He-Ne gas lasers (594.1 nm, 611.9 nm).

There may be also available the combination of various lasers with wavelength-converting devices, and preferred in view of the compactness is the combination of an infrared semiconductor laser with an SHG device.

Usable as light sources for the green light, red light and infrared light other than the yellow light source are any of the combination of white light sources with filters, the combination of light-emitting diodes, gas lasers, solid lasers, semiconductor lasers or all sorts of lasers with wavelength-converting devices.

As examples, the green light sources include a He-Ne gas laser (543.5 nm), an $Ar^+$ gas laser (514.5 nm), a $Kr^+$ gas laser (520.8 nm) and a combination of an infrared semiconductor laser with an SHG device; the red light sources include a He-Ne gas laser (632.8 nm), a $Kr^+$ gas laser (647.1 nm) and semiconductor lasers (678 nm), (750 nm), (780 nm); and infrared light sources include semiconductor lasers (810 nm), (830 nm), (850 nm), (1,030 nm), (1,300 nm) and light-emitting diodes (peak wavelength: 890 nm), (peak wavelength: 940 nm).

A plurality of oscillation may be obtained from one beam He-Ne gas laser, and used in a form divided by dichromic mirrors. For example, three beams of oscillation lines (543.5 nm, 594.1 nm and 632.8 nm) may be obtained from one beam He-Ne gas laser.

In this invention, preferred is an embodiment in which a frame memory or memories corresponding to a sheet or several sheets of images are held in front of D/A converters 4B, 4G and 4R and the image signals are outputted after they are once stored in the frame memories. The input signals may comprise either digital image signals or analog image signals. In instances where the analog image signals are inputted, none of D/A converters 4B, 4G and 4R are required.

In instances where video signals are used as the analog signals, preferred are NTSC signals, BGR signals, HDTV (high vision) signals.

In this invention, light-source-stabilizing units such as light feedback units, light feed forward units or combined units thereof may optionally be added before beams are put in the optical modulators 2B, 2G and 2R.

Using optical fibers as in Japanese Patent Applications No. 180438/1986 and No. 180856/1986 in place of flying light beams in space as in the example may preferably improve the maintenance, desirably. The respective parts may also more preferably be made into solids by use of optical waveguides, as thereby the number of the parts can be reduced and further mass production becomes possible to lower the cost.

The optical modulators 2B, 2G and 2R each include electric optical modulators, acoustic optical modulators (AOM), waveguide type modulators (Japanese Unexamined Patent Publication No. 94823/1987) and loop type optical modulators (Japanese Unexamined Patent Publication No. 94821/1987).

Also in this invention, in instances in which the semiconductor lasers or light-emitting diodes are used as the light sources, the optical modulation may preferably be effected by direct current modulation without providing any optical modulators, as thereby the number of parts can be reduced.

The optical scanning method in this invention comprises the rotation of a drum as primary scanning and the movement of a drum as secondary scanning in the accompanying drawings, but other method may be also used.

For example, it includes the following:

| Primary | Secondary |
|---|---|
| a) Rotation of drum | Galvanometer |
| b) Rotation of drum | Movement of objective lens 11 (Japanese Patent Publication No. 11062/1984) |
| c) Galvanometer | Galvanometer (Japanese Unexamined Patent Publication No. 4071/1980) |
| d) Galvanometer | Conveyance of roll light-sensitive materials |
| e) Polygon | Galvanometer |
| f) Polygon | Conveyance of roll light-sensitive materials (Japanese Patent Publication No. 14963/1981) |

In place of the galvanometer, rhizoment scanners having the same functions may also be available.

In the instance where the direct current modulation is effected by using semiconductor lasers or light-emitting diodes, the light sources themselves may be moved with movement of the objective lens in b).

Semiconductor laser arrays or light-emitting diode arrays may also be used as light sources. In this instance, the scanning may comprise one, and the array may be scanned or the light-sensitive material may be scanned. The scanning of the light-sensitive material in this instance may comprise any of the rotation of the drum or conveyance of the roll light-sensitive material.

Of these instances, in an instance where the image formation is carried out in a large quantity and high speed, preferred are d) and f) where the roll light-sensitive materials are used.

In the instance of a sheet light-sensitive material, preferred are a), b), c) and e). More preferred to make the speed higher are c) and e), and particularly preferred is e).

In place of the above galvanometer or polygon, also preferred as being compact is to use solid scanners as

exemplified by an optical scanner which generates elastic surface waves in an optical waveguide (Japanese Unexamined Patent Publication No. 75622/1987) or an optical scanner comprising a laminated material with a contiguous layer in an optical waveguide, an energy-applying means, and a drive circuit (Japanese Unexamined Patent Publication No. 83727/1987).

In this invention, the digital color image signals in Fig. may be any signals as exemplified by those read from prints, originals of prints, and photographs (such as color prints, color negatives and color reversals).

In this invention, a computer 3 may preferably be inserted in front of the optical modulators 2B, 2G and 2R, as thereby various image processing can be carried out.

In this instance, the image data may be produced by the computer itself, as exemplified by computer graphics.

This computer may comprise a general purpose computer or a computer for exclusive use in image processing. The image processing operational functions possessed by the computer may include processing for removing noises in process image data for obtaining desired sharpness (such as Laplacean operation), tone conversion processing such as gradation conversion or color conversion, and affein conversion processing (such as enlargement, reduction, rotation, parallel movement, trimming, and mapping synthesis), as well as any special processing such as layout of two or more images, impartation of characters or signs, and also soft focusing. Particularly in instances in which the input image data are those read from a light-sensitive silver halide photographic material, image quality can be preferably improved by the smoothing of graininess of silver halides, correction of gradation or the like processing. Particularly in instances in which an input light-sensitive silver halide photographic material comprises a photographed light-sensitive material such as a photograph, image quality can be preferably improved by the amendment of under-exposure or over-exposure, out-of-focus, etc.

In instances in which an output light-sensitive material comprises a light-sensitive silver halide photographic material, image quality can be preferably improved by the correction of gradation, correction to neutrality, etc.

In this invention, a supplier and a receiver may preferably be provided for the output light-sensitive material, as thereby the light-sensitive material can be made easy to handle. For example, in the case of the sheet light-sensitive material, preferred are a drum in a portable dark box, or casette suppliers or casette receivers comprising a dark box capable of containing several ten sheets; and in the case of the roll light-sensitive material, casette suppliers or casette receivers comprising a dark box.

In this invention, the light-sensitive material may be any of silver halide color negative paper, silver halide color positive paper, silver halide color negative films, silver halide color positive films and so forth if they have spectral sensitivities corresponding to the spectral distribution of light intensity of light sources. These light-sensitive silver halide color photographic materials may be any of wet processing type and dry processing type, without any limitation.

In this invention, in instances where the apparatus is an apparatus to make output to a light-sensitive color photographic material, the apparatus may preferably have a color development processing unit. Needless to say, this processing unit should be a unit suited for the light-sensitive material to be used.

In this invention, as methods of inputting the digital color image signals shown in Fig. 1, they may be inputted from output signals from a computer, or from a medium such as a magnetic tape, a magnetic disc, a laser disc or a photomagnetic disc.

In this invention, the apparatus may have an image reader at the signal input section. The image reader may be any of scanners which read original images by optical scanning, or those which read them by means of a CCD array or a two-dimensional CCD, but preferred are those using the CCD in view of the compactness and high speed performance.

In this invention, there is no limitation in the writing speed, the size (aperture) of the image to be written and the size of output image.

Preferred embodiments of this invention include a variety of embodiments.

For example, preferred embodiments include a color copying machine having the image reader and the color development processing unit, and capable of reading various original images and making output to light-sensitive silver halide color photographic materials; a color printer having the image reader and the color development processing unit, and capable of reading silver halide negative films or positive films and making output to silver halide negative paper or positive paper; a reproduction (extra-printing) unit having the image reader and the color development processing unit, and capable of making reading and making output to the light-sensitive materials same as light-sensitive silver halide color photographic materials; and a color proof system (tone-detecting system) having the image reader and the color development processing unit, and capable of reading originals for prints or separation plates for prints and making output to light-sensitive silver halide color photographic materials.

Other embodiments preferred as general purpose output apparatus that can obtain an image by making connection with other signal output units through signal input terminals, include, for example, a hard-copying apparatus for a computer that receives as input signals the output signals from a computer, a color printer that receives as input signals the output signals from an image reader, a color printer that directly receives input signals from mediums such as magnetic tapes, magnetic discs, laser discs and photomagnetic discs, and a video printer that receives as input signals the video signals.

These apparatus should preferably have the color development processing unit in the instance where the output is made to light-sensitive silver halide photographic materials.

The light-sensitive silver halide color photographic material of this invention will be described below.

Light sources for the optical scanning exposure apparatus include He-Ne gas lasers as being inexpensive and excellent in stability, life, compactness, etc., which are capable of emitting light of 543.5 nm, 594.5 nm, 611.0 nm and 632.8 nm.

The light of 543.5 nm is green light and the light of 632.8 nm is red light, to which a green-sensitive layer and a red-sensitive layer of silver halide emulsion layers have sensitivities. Usually the light-sensitive silver halide color photographic material contains another layer of a blue-sensitive layer having sensitivity to blue light, but in this invention a yellow-sensitive layer having sensitivity to the light of 594.1 nm and 611.9 nm is provided in place of it, so that it becomes possible to form an image by using the optical scanning exposure apparatus having as light sources the He-Ne lasers capable of emitting three colors of 543.5 nm, 594.1 nm and 632.8 nm or 543.5 nm, 611.9 nm and 632.8 nm. As compared with the instance where the light-sensitive material comprises a blue-sensitive layer, a green-sensitive layer and a red-sensitive layer, the distance of the light-sensitive wavelengths between the respective layers become shorter, bringing about a possibility of color mixing. Since, however, the light sources are monochromatic, the color mixing can be prevented by effecting spectral sensitization in which the form of spectral sensitivity distribution and the sensitivity balance have been so controlled that sufficient differences in sensitivity can be taken between the light-sensitive layers corresponding to the respective wavelengths of light sources.

The $\lambda Y$ of the yellow-sensitive silver halide emulsion layer may be satisfactory if it is 560 $\leqq \lambda Y \leqq$ 620 nm, but, in view of the separation of the light-sensitive wavelengths of the respective light-sensitive layers, it is particularly preferred to make the spectral sensitization so that the $\lambda Y$ may be 580 $\leqq \lambda Y \leqq$ 600 nm.

Since also the light-sensitive silver halide color photographic material of this invention does not require the blue-sensitive silver halide emulsion layer, it becomes possible to use the blue light as safe light if the sensitivity to the blue light is sufficiently lowered, bringing about the merit that the light-sensitive material becomes very easy to handle. Available as methods therefor is a method in which a filter layer to intercept the blue light is provided at an upper layer than all of the light-sensitive layers, or a method in which a silver chloride emulsion having a very low specific sensitivity in the visible region is used as a silver halide emulsion.

A full-color light-sensitive photographic material is prepared by incorporating a yellow coupler, a magenta coupler and a cyan coupler in at least three light-sensitive layers having sensitivities to the three kinds of light having different wavelengths.

The three kinds of light having different wavelengths refer to yellow light and two kinds of light selected from green light, red light and infrared light. To show examples, they are 1) green light, yellow light and red light, 2) green light, yellow light and infrared light, 3) yellow light, red light and infrared light, and 4) the combination of three colors between yellow light and two kinds of infrared light having different wavelengths.

From the viewpoint that stable and inexpensive light sources can be used, preferred is a light-sensitive silver halide color photographic material comprising at least three layers having sensitivities to the green light, yellow light and red light as in 1).

The light-sensitive silver halide color photographic material of this invention has a light-sensitive layer whose maximum sensitivity wavelength ($\lambda Y$) of spectral sensitivity distribution is 560 nm $\leqq \lambda Y \leqq$ 620 nm (yellow-sensitive silver halide emulsion layer). In order to impart the maximum sensitivity wavelength of spectral sensitivity distribution to the above wavelength region, a sensitizing dye agreeable with the purpose is selected from known sensitizing dyes and added to the silver halide to carry out the spectral sensitization.

Particularly preferable sensitizing dye may include those represented by Formula (a) shown below: Formula (a)

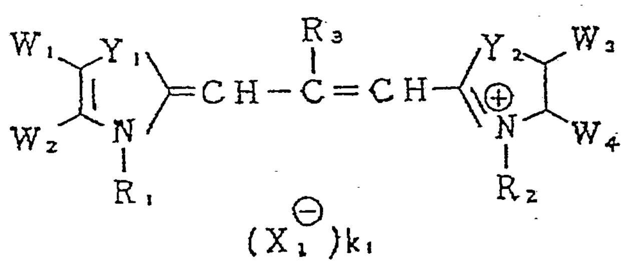

wherein $R_1$ and $R_2$ each represent an alkyl group; $R_3$ represents hydrogen atom, an alkyl group (for example a methyl group, an ethyl group, a propyl group, a n-butyl group, etc.), an aralkyl group (e.g. benzyl group), an aryl group (e.g. a phenyl group, a p-tolyl group, etc.), a heterocyclic group (e.g. a 2-furyl group, a 2-tienyl group, etc.) or an acidic neucleus group (e.g. respective groups of 2,4,6-triketohexahydropyrimidine derivatives, pyrazolone derivatives, 2-thio-2,4,6-triketohexapyrimidine derivatives, hydantoin derivatives, indanedione derivatives, thianaphtenone derivatives, oxazolone derivatives, etc.); $W_1$,

$W_2$, $W_3$ and $W_4$ each represent hydrogen atom, an alkyl group (e.g. a methyl group, an ethyl group, etc.), a phenyl group, preferably $W_1$ and $W_2$ and/or $W_3$ and $W_4$ combine each other to form a benzene ring, a cyclohexane ring, a thiophene ring, a naphthalene ring, etc., and these rings may include those having as a substituent halogen atoms (e.g. fluorine atom, chlorine atom, brorine atom, etc.), an alkyl group (e.g. a methyl group, an ethyl group, etc.), an alkoxy group (e.g. a methoxy group, an ethoxy group, etc.), a phenyl group, a trifluoromethyl group, a cyano group, an alkoxycarbonyl group (e.g. a methoxycarbonyl group, a butoxycarbonyl group, etc.), a carbamoyl group (e.g. a carbamoyl group, a N,N-dimethylaminocarbonyl group, etc.), a sulfonyl group (e.g. a methane sulfonyl group, a benzenesulfonyl group, etc.), a sulfamoyl group (e.g. a sulfamoyl group, a N,N-dimethylaminosulfonyl group, etc.), etc. on the ring; $Y_1$ and $Y_2$ each represent oxygen atom, sulfur atom, selenium atom, terbium atom or a group represented by $-\overset{|}{N}-R_4$, where $R_4$ represents an alkyl group, a cyclic alkyl group, a heterocyclic group or an aryl group; $X_1^{\ominus}$ represents an acidic anion; and k1 represents an integar of 0 or 1.

In the compounds of Formula (a), particularly preferable is those in which $Y_1$ is oxygen and $Y_2$ is sulfur or those in which $Y_1$ is nitrogen and $Y_2$ is sulfur. Exemplary compounds of of Formula (a) are showm below.

(a - 1)

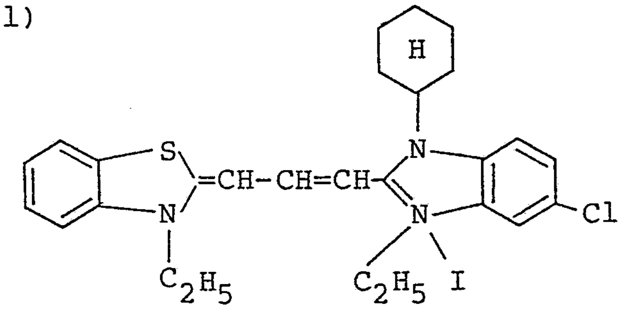

(a - 2)

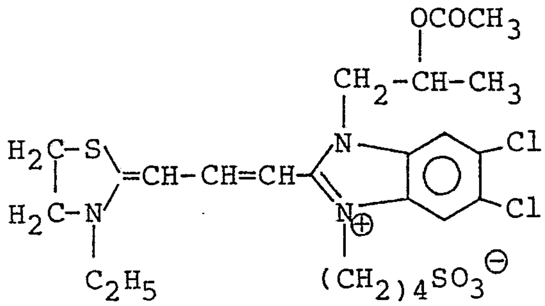

(a - 3)

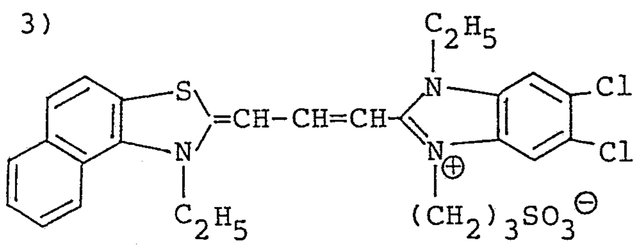

(a - 4)

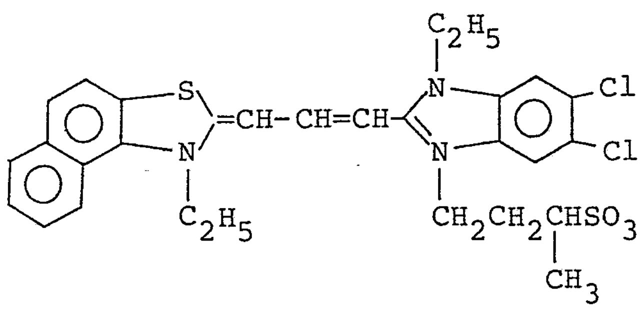

(a - 5)

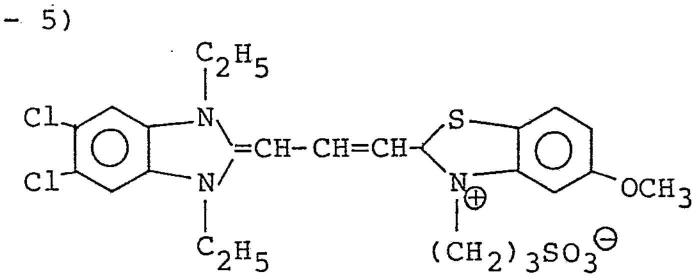

(a - 6)

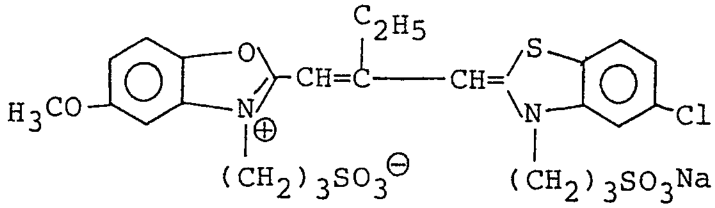

(a - 7)

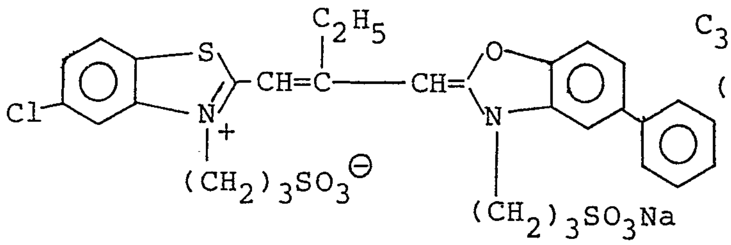

$C_{31}H_{30}ClN_2O_7S_3Na$

(MW = 682.5)

(a - 8)

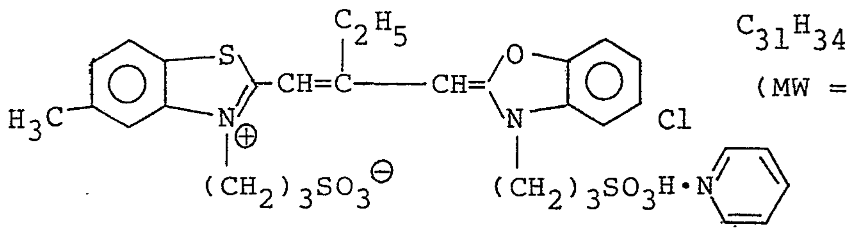

$C_{31}H_{34}ClN_3O_7S_3$

(MW = 691.5)

(a - 9)

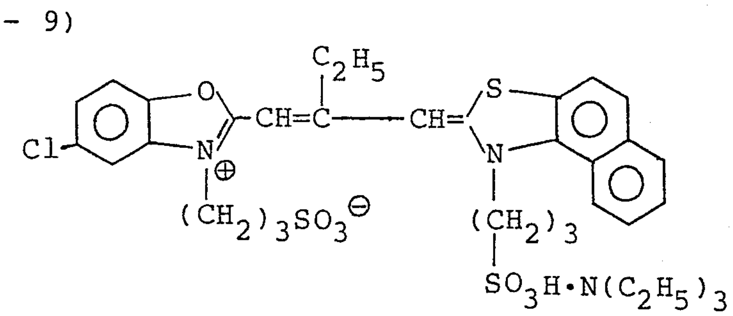

(MW = 750.38)

(a - 10)

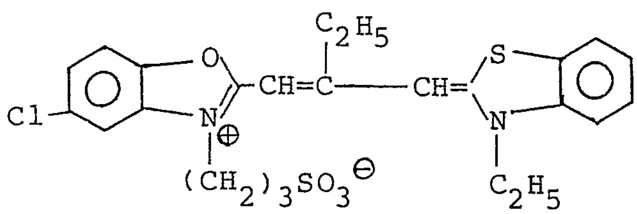

(MW = 505.05)

The amount for adding the sensitizing dye is not limitative, but the sensitizing dye may preferably be added in an amount of from $10^{-9}$ to $10^{-2}$ mol per mol of silver halide.

Also in respect of the light-sensitive layers (the green-sensitive layer, red-sensitive layer and infrared-sensitive layer) other than the yellow-sensitive layer, the sensitizing dyes are appropriately selected from known sensitizing dyes so as to impart the maximum sensitivity wavelength of spectral sensitivity distribution to the intended light-sensitive wavelength regions in the same manner as in the above.

Known sensitizing dyes may include cyanine dyes, merocyanine dyes, composite cyanine dyes, composite merocyanine dyes, holopolar cyanine dyes, hemicyanine dyes, styryl dyes and hemioxonol dyes. Particularly useful sensitizing dyes are dyes grouped to cyanine dyes, merocyanine dyes and composite merocyanine dyes.

Usable as silver halides in the silver halide emulsion used in the light-sensitive silver halide color photographic material of this invention are any of silver bromide, silver iodobromide, silver chlorobromide, silver chloride, etc. which are used in conventional silver halide emulsions.

An emulsion substantially consisting of silver chloride, which have no sensitivity to blue light, can be preferably used as being very advantageous in the two points that the blue light can be used as safe light and that the development speed is so high that the rapid processing can be carried out. The emulsion substantially consisting of silver chloride means that silver bromide and/or silver iodide may be contained so long as the above two points are not impaired.

Silver halide grains used in this invention may be of homogeneous composition, or may be of composition having difference between the inside and the surface, or further may have a joined structure or a multi-phase structure. Alternatively, they may also be present in a mixed state. There is no limitation in the shapes of the silver halide grains, and can be used those of the crystal form known in the present industrial field, but preferred are those comprising regular crystals such as cubes, octahedrons, dodecahedrons, tetradecahedrons and tetracosahedrons.

Average grain size of the silver halide grains is not limitative, but preferably used is the size of from 0.15 μm to 3 μm. The average grain size herein mentioned is the length of one side when calculated as a cube having the same volume. The silver halide emulsion may comprise a polydisperse emulsion in which the grain size of the respective silver halide grains is distributed over a wide range, but preferably comprise a monodisperse emulsion having a narrow grain size distribution.

The above silver halide grains can be prepared by known methods. More specifically, any of acidic methods, neutral methods and ammoniacal methods may be used, and also usable are the so-called one side mixing methods, simultaneous mixing methods and reverse mixing methods. The so-called controlled-double jet method which is one form of the simultaneous mixing methods wherein the pAg, pH, humidity and so forth at the time of forming grains are controlled within certain ranges is particularly preferred as being capable of obtaining the monodisperse emulsion.

In the course of the formation of silver halide grains or the physical ripening, cadmium salts, zinc salts, lead salts, thallium salts, iridium salts or complexes thereof, rhodium salts or complexes thereof, iron salts or iron complex salts, etc. may be made present together.

The emulsion is usually subjected to removal of soluble salts after the formation of precipitates or the physical ripening, and as a means therefor there may be used the Nuder's water washing method carried out by forming gelatin into a gel, or may be used the settling method (flocculation) utilizing inorganic salts comprising multivalent anion such as sodium sulfate, anionic surface active agents, anionic polymers (as exemplified by polystyrenesulfonic acid) or gelatin derivatives (as exemplified by aliphatic acylated gelatins, aromatic acylated gelatins and aromatic carbamoyl type gelatin).

After the required end silver halide grains were formed, also usually practiced is to remove the soluble salts according to the Nuder's water washing method as mentioned above or the like method, and there may also be used the method such that the soluble salts are removed at an intermediary step of the grain growth and stored, and thereafter the grains are continued to grow by using part or all of them to obtain the above end grains.

In the emulsion, gelatin is chiefly used as a protective colloid, where inert gelatin is particularly advantageous. It is also possible to use photographically inert gelatin derivatives in place of the gelatin.

The light-sensitive silver halide photographic emulsion may preferably be subjected to chemical ripening according to conventional methods. For example, usable are methods described in Mees, The Theory of Photographic Process, or other various known methods. More specifically, it can be also sensitized by sulfur sensitization, gold sensitization, etc. in the chemical sensitization usually carried out.

In instances where the light-sensitive silver halide color photographic material of this invention is used as a full-color light-sensitive photographic material, three kinds of couplers, i.e., an yellow coupler, a magenta coupler and a cyan coupler, are used in at least three light-sensitive layers having sensitivities to the three kinds of light having different wavelengths. These couplers may be of the so-called two equivalent type or four equivalent type.

Of the above yellow coupler, preferably used as having excellent color reproducibility is a coupler represented by Formula (I) shown below.

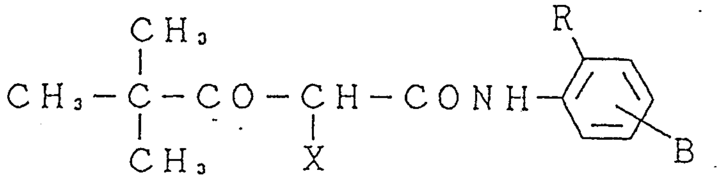

In the formula, X reresents a substituent capable of being split off through the reaction with an oxidized product of a developing agent, R represents a substituted or unsubstituted alkyl group, and B represents a non-diffusible ballast group.

Examples of the yellow coupler represented by the above Formula (I) are described in Japanese Patent Application No. 66277/1987.

As the above yellow coupler, usable as effective yellow couplers are all sorts of open-chain ketomethylene compounds, and also the so-called two equivalent type couplers including active-site-o-aryl substituted couplers, active-site-o-acyl substituted couplers, active-site hydantoin compound substituted couplers, active-site urazole compound substituted couplers and active-site succinic acid imide compound substituted couplers, active-site fluorine substituted couplers, active-site chlorine or bromine substituted couplers, active-site-o-sulfonyl substituted couplers, etc.

The magenta coupler used in this invention may include all sorts of pyrazolone type, pyrazolotriazole type, pyrazolinobenzimidazole type or indazolone type compounds.

Of the above magenta couplers, preferably used as having excellent color reproducibility and excellent stability of color images are pyrazolotriazole type couplers. Examples of the pyrazolotriazole type magenta couplers are described in Japanese Patent Application No. 66277/1987.

The useful cyan coupler used in this invention may include all sorts of phenol type couplers, naphthol type couplers and imidazole type couplers.

Of the above cyan couplers, preferred as having excellent storage stability of color images are acylamino type cyan couplers described in Japanese Patent Application No. 118443/1986; and as having excellent color reproducibility, diphenylimidazole type cyan couplers described in Japanese Patent Application No. 138869/1986.

In the light-sensitive silver halide color photographic material of this invention, a hydrophilic colloid layer may preferably contain a water-soluble dye as a filter dye or for the purpose of preventing irradiation and other various purposes. Such a dye includes oxonol dyes, hemioxonol dyes, merocyanine dyes and azo dyes. In particular, useful are oxonol dyes, hemioxonol dyes and merocyanine dyes. Examples of the dyes that can be used are described in British Patents No. 584,609 and No. 1,277,429, Japanese Unexamined Patent Publications No. 85130/1973, No. 99620/1974, No. 114420/1974, No. 129537/1974, No. 108115/1977 and No. 25845/1984, and U.S. Patents No. 2,274,782, No. 2,533,472, No. 2,958,879, No. 3,125,448, No. 3,148,187, No. 3,117,078, No. 3,247,127, No. 3,540,887, No. 3,575,704, No. 3,653,905, No. 3,718,472, No. 4,071,312 and No. 4,070,352.

The light-sensitive silver halide color photographic material of this invention may further contain all sorts of photographic additives. For example, there can be used antifoggants, stabilizers, ultraviolet absorbents, color-stain preventive agents, brightening agents, color-image-fading preventive agents, antistatic agents, hardening agents, surface active agents, plasticizers and wetting agents. (Reference can be made to Research Disclosure No. 17643.)

In the light-sensitive silver halide color photographic material of this invention, the hydrophilic colloid which is used to repare the silver halide emulsion of this invention includes any of gelatin, gelatin derivatives, graft polymers of gelatin with other polymers, proteins such as albumin and casein, cellulose derivatives such as hydroxyethyl cellulose and carboxymethyl cellulose, starch derivatives, and synthetic hydrophilic macromolecules of homopolymers or copolymers of polyvinyl alcohol, polyvinylimidazole, polyacrylamide, etc.

The support for the light-sensitive silver halide color photographic material of this invention may be any of the so-called reflection type supports or transmission type supports, including, for example, baryta paper, polyethylene-coated paper, polypropylene synthetic paper, transparent supports as exemplified by glass sheets, polyester films such as a cellulose acetate film, a cellulose nitrate film or polyethylene terephthalate or the like, polyamide films, polycarbonate films, and polystyrene films. (The above transparent supports may be provided together with a reflective layer or may be used in combination with a reflective material.) These supports are appropriately selected according to what the light-sensitive materials are used for.

To provide by coating the emulsion layers and other component layers used in this invention, various coating methods can be used, including dip coating, air-doctor coating, curtain coating and hopper coating. It is also possible to use a method of simultaneously coating two or more layers according to the method described in U.S. Patents No. 2,781,791 and No. 2,941,898.

In this invention, the position at which each emulsion layer is provided by coating can be arbitrarily selected.

In the light-sensitive material of this invention, it is optional to provide intermediate layers having an appropriate thickness depending on the purposes, and various layers such as filter layers, anti-curling layers, protective layers and anti-halation layers can be further used in combination as component layers. In these component layers, the hydrophilic colloids usable in the emulsion layers as described above can be similarly used as binders, and also the various photographic additives listed in the description for the above emulsion layers can be contained in the layers.

There is no particular limitation in the processing methods for the light-sensitive photographic material using the silver halide emulsion of this invention, and every processing method can be applied. For example, the processing may be carried out by using any methods typically including a method comprising carrying out bleach-fixing after color developing, followed optionally by washing and/or stabilizing; a method comprising separately carrying out bleaching and fixing after color developing, followed optionally by washing and/or stabilizing; a method comprising carrying out pre-hardening, neutralizing, color developing, stop-fixing, washing, bleaching, fixing, washing, post-hardening and washing in this order; a method comprising carrying out color developing, washing, supplementary color developing, stopping, bleaching, fixing, washing and stabilizing in this order; and a development method comprising subjecting developed silver formed by color development to halogenation bleaching, and thereafter carrying out again color developing to increase the quantity of formed dyes. However, the light-sensitive silver halide color photographic material of this invention is suited for the rapid processing comprising the steps of color developing, bleach-fixing and washing (or stabilizing).

A color developing solution used in the processing of the light-sensitive silver halide color photographic material of this invention comprises an aqueous alkaline solution containing a color developing agent and having the pH preferably of 8 or more, more preferably 9 to 12. An aromatic primary amine developing agent as this color developing agent is a compound having a primary amino group on the aromatic group ring and capable of developing silver halide exposed to light, and may further optionally contain a precursor forming such a compound.

The above color developing solution may optionally contain as antioxidants, N,N-diethylhydroxyamine, tetronic acid, tetronimide, 2-anilinoethanol, dihydroxyacetone aromatic secondary alcohol, hydroxamic acid, pentose or hexose, pyrogallol-1,3-dimethylether, etc.

The above color developing solution may also optionally further contain various components usually added, as exemplified by alkali agents such as sodium hydroxide and sodium carbonate, alkali metal sulfites, alkali metal hydrogensulfites, alkali metal thiocyanates, alkali metal chlorides, benzyl alcohol, water-softening agents, thickening agents and development accelerators.

Provided that benzyl alcohol may preferably be not added in the color developing solution. More specifically, the benzyl alcohol has a high BOD or COD, the values for burden to environmental pollution. Also the benzyl alcohol has so a low affinity for water that it additionally requires diethylene glycol or triethylene glycol as a solvent, but the glycols have also a high BOD or COD. Accordingly, the processing solutions overflown and thrown away involve the problem of environmental pollution. The benzyl alcohol has also a low solubility to developing solutions, and takes a long time to prepare the developing solutions or prepare replenishing solutions, bringing about a problem in the operational viewpoint. Also, replenishing in a large quantity results in preparing replenishing solutions in many times, also bringing about a burden in the operational viewpoint.

Accordingly, the color developing solution substantially containing no benzyl alcohol can very preferably settle the problem of environmental pollution and the problem in the operational viewpoint.

Generally known as bleaching agents used in a bleaching solution or bleach-fixing solution in the bleaching step are compounds comprising a metal ion such as iron, cobalt and copper coordinated with an aminopolycarboxylic acid or an organic acid such as oxalic acid and citric acid.

The bleaching solution may contain various additives together with the above bleaching agents. In instances where the bleach-fixing solution is used in the bleaching step, applied in addition to the above bleaching agent is a solution having the composition containing a silver halide fixing agent. The bleach-fixing solution may further contain halogen compounds as exemplified by potassium chloride. Similar to the case of the bleaching solution, there may also be added and contained other various additives as exemplified by buffering agents, brightening agents, anti-foaming agents, surface active agents, preservatives, chelating agents, stabilizers, and organic solvents.

All the processing steps such as color developing, bleach-fixing (or bleaching and fixing), and also the washing, stabilizing and drying which are optionally carried out, for the light-sensitive silver halide color photographic material of this invention may preferably be carried out at a processing temperature of 30°C or more from the viewpoint of the rapid processing.

The light-sensitive layers containing a non-diffusible coupler and a silver halide emulsion according to this invention are preferably subjected to spectral sensitization so that the maximum sensitivity wavelength ($\lambda Y$) of spectral sensitivity distribution may be 500 nm $\leqq \lambda Y \leqq$ 560 nm, 560 nm $\leqq \lambda Y \leqq$ 620 nm and 620 nm $\leqq \lambda Y$, respectively.

Examples of this invention will be set out below.

Example 1

Fig. 2 is an apparatus diagram illustrating an example of this invention. It is an apparatus for recording digital image data from a computer on a light-sensitive color photographic material mounted on a drum. The symbol

1Y denotes a He-Ne gas laser (594.1 nm, blue light); 1G, a He-Ne gas laser (543.5 nm, green light); and 1R, a He-Ne gas laser (632.8 nm, red light).

Light beams emitted from laser light sources 1Y, 1G and 1R are put in optical modulators 2Y, 2G and 2R. In these modulators 2Y, 2G and 2R, the modulated signals for each color from a computer 3 are applied from D/A converters 4Y, 4G and 4R to effect the beam strength modulation. The computer 3 performs image processing such as gradation processing and outline emphasis processing, of the digital color image signals and outputs them as modulated signals.

The light beams of the respective colors, modulated by the optical modulators 2Y, 2G and 2R are made change in optical axes by the reflection by mirrors 6Y, 6G and 6R, where the light beam reflected by the mirror 6R is adjusted in its optical axis to the side of a dichromic mirror 8 and synthesized with the reflected beam from the mirror 6G by means of a dichromic mirror 9. The the light beam having synthesized by these mirrors is adjusted in its optical axis by a mirror 10, further focused through a lens 11 and irradiated on a light-sensitive color photographic material 13 rolled around a drum 12. The drum 12 is rotated in a constant speed in the direction of arrow 8 (primary scanning) and concurrently moved to the direction of arrow X (secondary scanning), whereby image printing is effected on the light-sensitive color photographic material 13.

The color image obtained by using in the apparatus shown in Example 1 a silver halide color negative paper having the spectral sensitivities corresponding to the spectral distribution of light intensity of the light sources and carrying out appropriate color development processing, was free from any noise showing unstableness of the light sources and had a high image quality.

In other words, the apparatus for forming a color image of this invention has a scanning exposure apparatus using inexpensive, stable, compact and long-life light sources, and can obtain a color image of high image quality.

Example 2

(Preparation of silver halide emulsions)

Prepared according to the neutral method and the simultaneous mixing method were 4 kinds of silver chlorobromide emulsions shown in Table 1, which were subjected to 4 kinds of spectral sensitization as shown in Table 1 to prepare light-sensitive silver halide emulsions.

Table 1

| Emulsion No. | Light-sensitivity | AgCl content (mol%) | Average grain size ( m) | Spectral sensitizing dye |
|---|---|---|---|---|
| Em-1 | Blue-sensitive | 99.5 | 0.67 | SD-1 *1 |
| Em-2 | Green-sensitive | 99.5 | 0.67 | SD-2 *2 |
| Em-3 | Red-sensitive | 99.5 | 0.43 | SD-3 *3 |
| Em-4 | Yellow-sensitive | 99.5 | 0.67 | SD-4 *4 |

*1: Added in an amount of 0.9 mmol per mol of silver halide

*2: Added in an amount of 0.7 mmol per mol of silver halide

*3: Added in an amount of 0.2 mmol per mol of silver halide

*4: Added in an amount of 0.9 mmol per mol of silver halide

EM-1 to EM-4 in the above was subjected to chemical sensitization in an optimum state by using sodium thiosulfate and chloroauric acid, and, after completion of the chemical sensitization, STB-1 shown below was added as an emulsion stabilizer in an amount of 5 x $10^{-3}$ mol per mol of silver halide.

[SD-1]

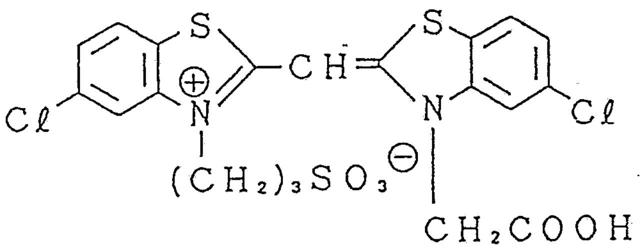

[SD-2]

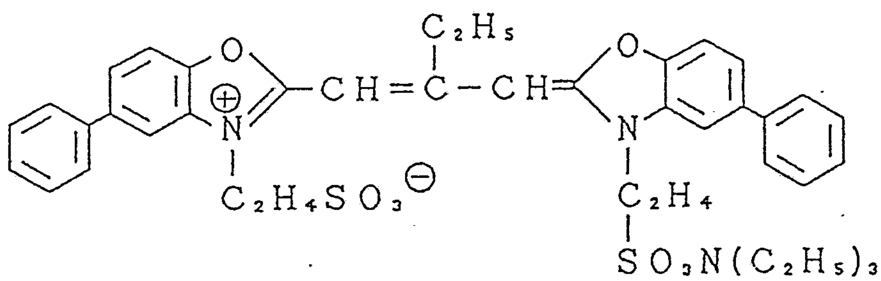

[SD-3]

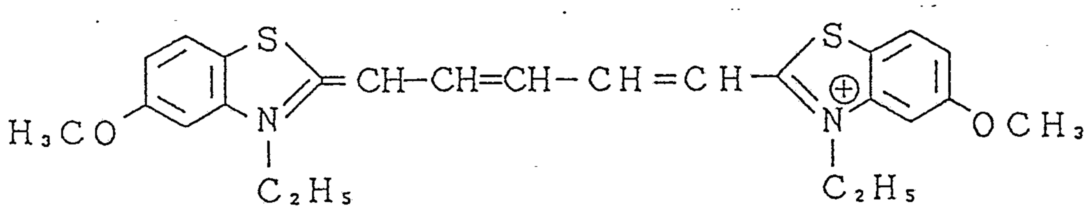

[SD−4]

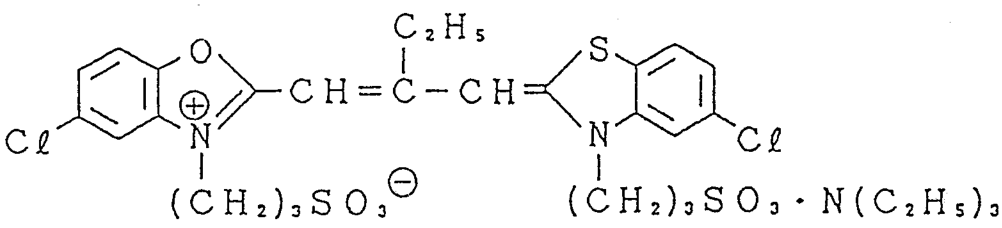

[STB−1]

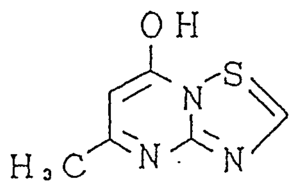

Preparation of samples of light-sensitive silver halide color photographic materials)

Subsequently, Layers 1 to 7 shown below were coated (simultaneous coating) in succession on a both surface polyethylene-coated paper support to prepare a light-sensitive silver halide color photographic material Sample No. 1. (In the following, the amount for addition is indicated in the amount per 1 $m^2$ of the light-sensitive material.

Layer 1 .... A layer containing gelatin (1.2 g), 0.29 g (in terms of silver; the same applies hereinafter) of a blue-sensitive silver halide emulsion (Em-1), and 0.3 g of dinonyl phthalate (DNP) in which 0.75 g of a yellow coupler (Y-1), 0.3 g of light-stabilizer ST-1 and 0.015 g of 2,5-dioctyl hydroquinone (HQ-1) were dissolved.

Layer 2 .... A layer containing gelatin(0.9 g) and 0.2 g of dioctyl phthalate (DOP) in which 0.04 g of HQ-1 was dissolved.

Layer 3 .... A layer containing gelatin (1.4 g), 0.2 g of a green-sensitive silver halide emulsion (Em-2), 0.3 g of DOP in which 0.9 mmol of a magenta coupler (M-1), 0.25 g of light-stabilizer ST-2 and 0.01 g of HQ-1 were dissolved, and 6 mg of filter dye AI-1 shown below.

Layer 4 .... A layer containing gelatin (1.2 g) and 0.3 g of DNP in which 0.6 g of ultraviolet absorbent UV-1 shown below and 0.05 g of HQ-1 were dissolved.

Layer 5 .... A layer containing gelatin (1.4 g), 0.20 g of a red-sensitive silver halide emulsion (Em-3), and 0.3 g of DOP in which 0.54 g of a cyan coupler (C-1), 0.01 g of HQ-1 and 0.3 g of ST-1 were dissolved.

Layer 6 .... A layer containing gelatin (1.1 g) and 0.2 g of DOP in which 0.2 g of UV-1 was dissolved, and 5 mg of filter dye AI-2 shown below.

Layer 7 .... A layer containing gelatin (1.0 g) and 0.05 g of sodium 2,4-dichloro-6-hydroxytriazine.

ST-1

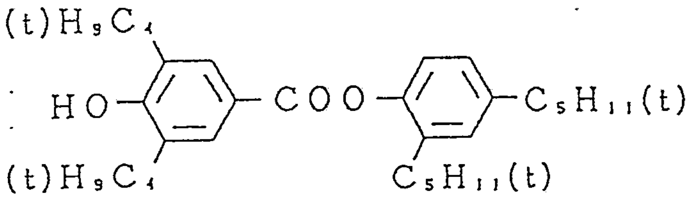

ST-2

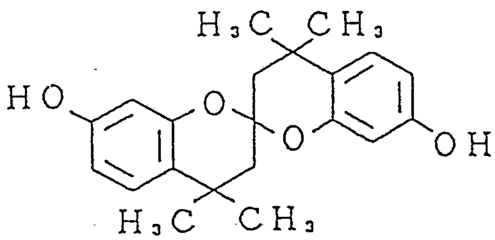

UV-1

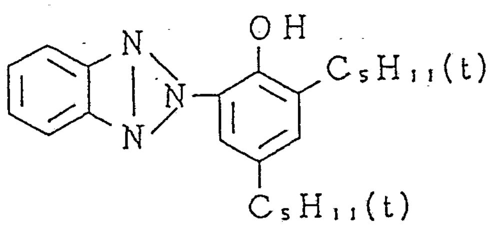

A I − 1

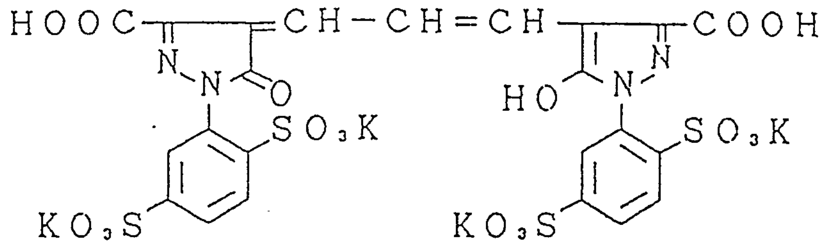

A I − 2

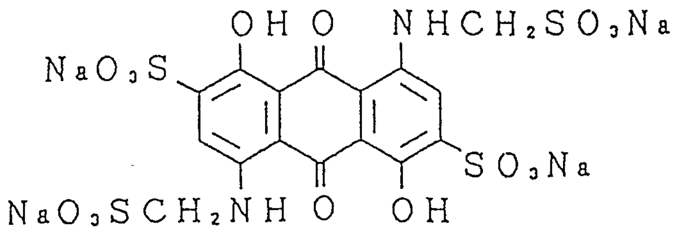

Y − 1

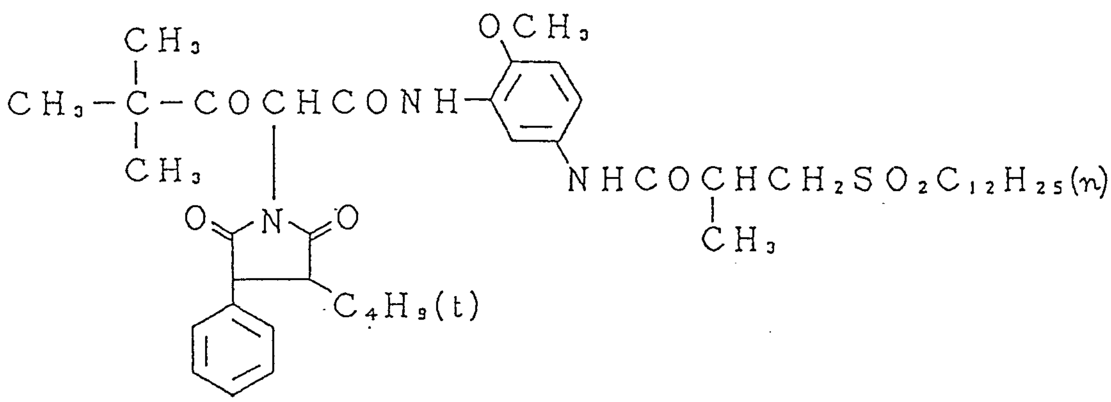

M − 1

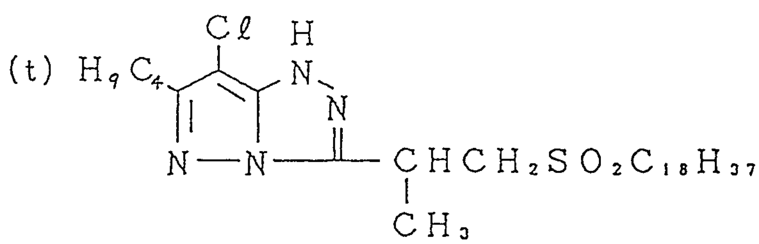

C − 1

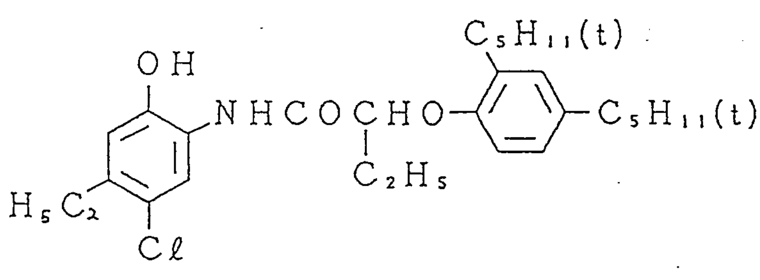

Sample No. 2 was prepared in the same manner as for Sample No. 1 except that a yellow-sensitive silver halide emulsion layer (EM-4) was added in place of EM-1 in Layer 1 of Sample No. 1 and 0.1 g of yellow colloid silver was added in Layer 6.

Sample No. 1 obtained was exposed to light with use of the scanning exposure apparatus as shown in Fig. 1, and Sample 2 was exposed to light with use of the scanning exposure apparatus as shown in Fig. 2.

The scanning exposure apparatus of Fig. 1 is an apparatus in which the three color laser beams are subjected to intensity modulation on the bases of image data by using optical modulators, and irradiated on the light-sensitive material. Using blue light (IB) of a He-Cd gas laser (441.6 nm), green light (IG) of a He-Ne gas laser (543.5 nm) and red light (1R) of a He-Ne gas laser (632.8 nm) as the three color laser beams, the light beams emitted from laser light sources 1B, 1G and 1R are put in optical modulators 2B, 2G and 2R. In these modulators 2B, 2G and 2R, the modulated signals for each color from a computer 3 are applied from D/A converters 4B, 4G and 4R to effect the beam strength modulation. In the present Example, the computer 3 performs image processing such as gradation processing and outline emphasis processing, of the digital color image signals and outputs them as modulated signals. Explanation on the subsequent procedures is omitted as having been made previously.

The scanning exposure apparatus of Fig. 2 is an apparatus in which the laser light source 1B (the He-Cd gas laser) in Fig. 1 was replaced by a He-Ne gas laser (594.1 nm) (laser light source 1Y).

Used as the image data are those obtained by reading an image photographed with use of a conventional color negative film and printed on a sheet of color photographic paper, and effecting B-G-R separation using a scanning type scanner. The scene photographed contains persons, trees, flowers, metals, glass, color charts, etc. having various colors and textures.

After exposure to light, Samples No. 1 and No. 2 were subjected to the color development processing shown below to obtain Prints 1 and 2.

| Processing step | Temperature | Time |
|---|---|---|
| (1) Color developing step | 35°C | 45 seconds |
| (2) Bleach-fixing step | 35°C | 45 seconds |
| (3) Stabilizing step | 30 to 34°C | 90 seconds |
| (4) Drying step | 60 to 90°C | 90 seconds |

Processing solutions used in the respective steps had the following composition.

(Color developing solution) Pure water 800 ml
Ethylene glycol 10 ml
N,N-diethylhydroxylamine 12 ml
Potassium chloride 2.0 g
Potassium sulfite 0.2 g
N-ethyl-N-β-methanesulfonamidoethyl-3-methyl-4-aminoaniline sulfate 5.0 g
Sodium polytetraphosphate 2.0 g
Potassium carbonate 30 g
Made up to 1 liter by adding pure water, and adjusted to pH = 10.08 with use of 20 % potassium hydroxide or 10 % diluted sulfuric acid.

(Bleach-fixing solution) Pure water 800 ml
Ethylenediaminetetraacetic acid iron (III) ammonium 65.0 g
Disodium ethylenediaminetetraacetate 5.0 g
Ammonium thiosulfate 85.0 g
Sodium hydrogensulfite 10.0 g
Sodium metabisulfite 2.0 g
Sodium chloride 10.0 g
Made up to 1 liter by adding pure water, and adjusted to pH = 6.2 with use of diluted sulfuric acid.

(Stabilizing solution) 5-Chloro-2-methyl-4-isothiazolin-3-one 1.0 g
1-Hydroxyethylidene-1,1-diphosphonic acid 2.0 g
Made up to 1 liter by adding water, and adjusted to pH = 7.0 with use of sulfuric acid or potassium hydroxide.

The image on Print 1 beared streaks in the scanning direction because of the unstableness of the blue light

source, while an image of high image quality, free of any noise, was able to be obtained on Print 2.

This shows that this invention is a light-sensitive material suited for the optical scanning exposure method using light sources which are inexpensive and have excellent stability, life and compactness, and yet a light-sensitive silver halide color photographic material that can obtain a color image of high image quality.

## Claims

1. An apparatus for forming a color image, comprising a scanning exposure unit, wherein the maximum intensity wavelength ($\lambda max$) of spectral distribution of the light intensity of at least one light source of said scanning exposure unit is 560 nm $\leqq \lambda max \leqq$ 620 nm, and the half width (W) of the spectral distribution is $W \leqq$ 20 nm.

2. The apparatus for forming a color image as described in Claim 1, wherein said light source of 560 nm $\leqq \lambda max \leqq$ 620 nm and $W \leqq$ 20 nm comprises a laser.

3. The apparatus for forming a color image as described in Claim 1, wherein said light source of 560 nm $\leqq \lambda max \leqq$ 620 nm and $W \leqq$ 20 nm comprises a He-Ne gas laser.

4. The apparatus for forming a color image as described in Claim 1, wherein a He-Ne gas laser of 560 nm $\leqq \lambda$ max $\leqq$ 620 nm and $W \leqq$ 20 nm and a He-Ne gas laser having the maximum intensity wavelength out of the range of 560 to 620 nm are used as light sources.

5. The apparatus for forming a color image as described in Claim 1, wherein a He-Ne gas laser only is used as the light source.

6. A light-sensitive silver halide color photographic material comprising a support and having thereon at least three light-sensitive layers containing a non-diffusible coupler and a silver halide emulsion, wherein at least one of said light-sensitive layers has been subjected to spectral sensitization so that the maximum sensitivity wavelength ($\lambda Y$) of spectral sensitivity distribution may be 560 nm $\leqq \lambda Y \leqq$ 620 nm, and said light-sensitive silver halide color photographic material is used for an apparatus for forming a color image comprising a scanning exposure unit in which the maximum intensity wavelength ($\lambda max$) of spectral distribution of the light intensity of at least one light source of said scanning exposure unit is 560 nm $\leqq \lambda$ max $\leqq$ 620 nm, and the half width (W) of the spectral distribution is $W \leqq$ 20 nm.

7. The light-sensitive silver halide color photographic material as described in Claim 6, comprising a green-sensitive silver halide emulsion layer and a red-sensitive silver halide emulsion layer.

8. The light-sensitive silver halide color photographic material as described in Claim 6, comprising no blue-sensitive silver halide emulsion layer.

9. The light-sensitive silver halide color photographic material as described in Claim 6, wherein said $\lambda$ Y is 580 nm $\leqq \lambda Y \leqq$ 600 nm.

10. The light-sensitive silver halide color photographic material as described in Claim 6, wherein the respective light-sensitive layers have been subjected to spectral sensitization so that the maximum sensitivity wavelength ($\lambda Y$) of spectral sensitivity distribution may be 500 nm $\leqq \lambda$ Y $\leqq$ 560 nm, 560 nm $\leqq \lambda Y \leqq$ 620 nm and 620 nm $\leqq \lambda Y$, respectively.

11. The light-sensitive silver halide color photographic material as described in Claim 6, wherein the spectral sensitization is effected by use of a sensitizing dye represented by Formula (a) shown below:

Formula (a)

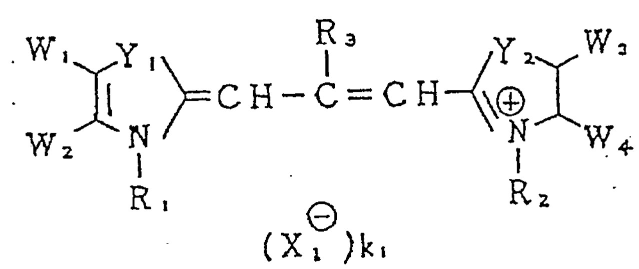

wherein $R_1$ and $R_2$ each represent an alkyl group; $R_3$ represents hydrogen atom, an alkyl group, an aralkyl group, an aryl group, a heterocyclic group or an acidic necleus group; $W_1$, $W_2$, $W_3$ and $W_4$ each represent hydrogen atom, an alkyl group or a phenyl group; $Y_1$ and $Y_2$ each represent oxygen atom, sulfur atom, selenium atom, terbium atom or a group represented by

$-N-R_4$, where $R_4$ represents an alkyl group, a cyclic alkyl group, a heterocyclic group or an aryl

group; $X_1^{\ominus}$ represents an acidic anion; and k1 represents an integar of 0 or 1.

12. A light-sensitive silver halide color photographic material comprising a support and having thereon at least three light-sensitive layers containing a non-diffusible coupler and a silver halide emulsion, wherein at least one of said light-sensitive layers has been subjected to spectral sensitization so that the maximum sensitivity wavelength ($\lambda Y$) of spectral sensitivity distribution may be 560 nm $\leqq \lambda Y \leqq$ 620 nm.

FIG. 1

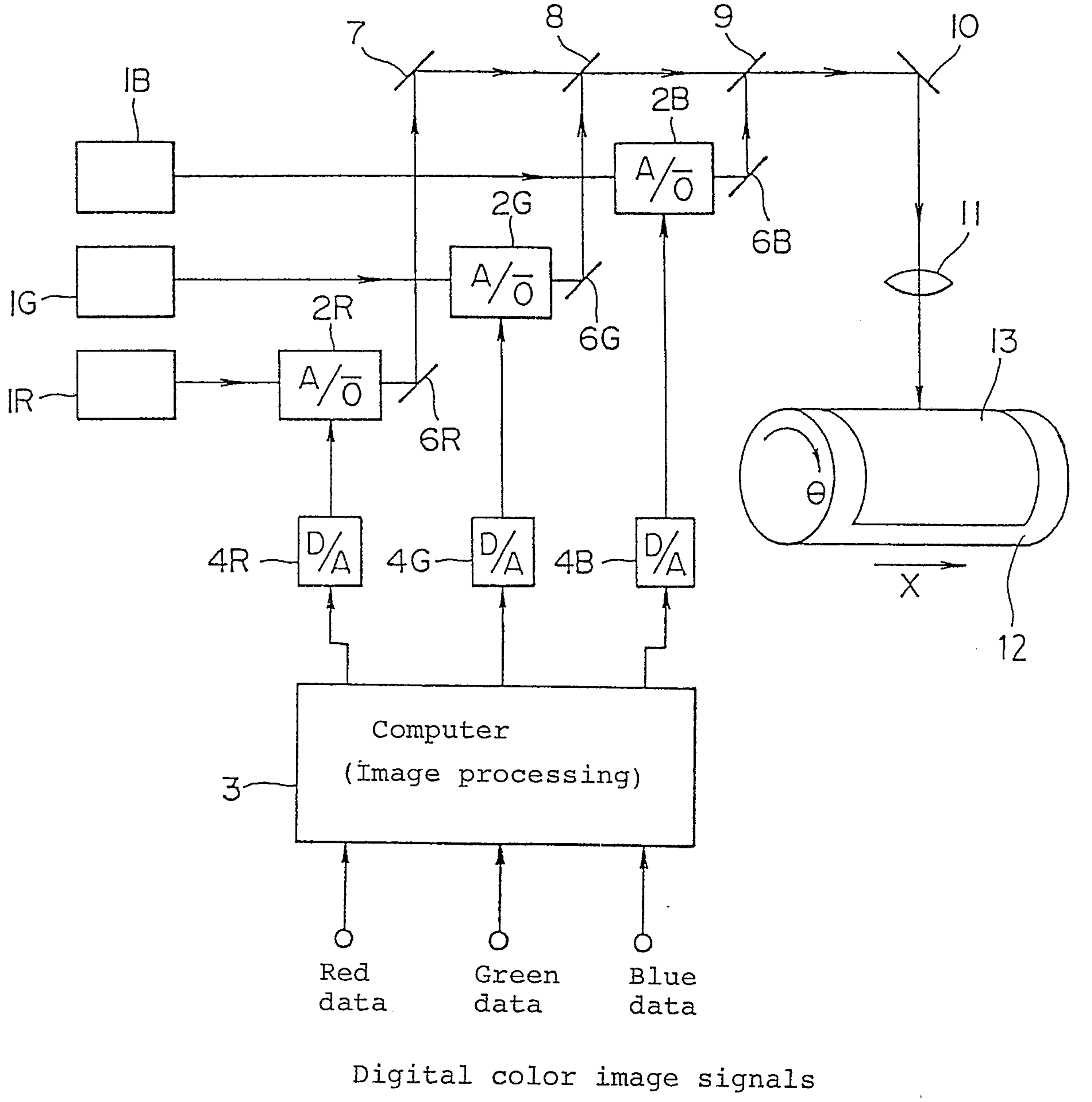
7
8
9
10
1B
2B
A/D
2G
6B
11
1G
A/D
6G
2R
13
1R
A/D
6R
θ
4R
D/A
4G
D/A
4B
D/A
X
12
Computer
(Image processing)
3
Red data
Green data
Blue data
Digital color image signals

0294193

FIG. 2